# EUROPEAN PATENT SPECIFICATION

(11) **EP 1 507 685 B1**
(45) Date of publication and mention of the grant of the patent: **19.12.2007**
(21) Application number: 03713876.5
(22) Date of filing: 06.03.2003
(51) Int. Cl.: B60R 21/26

(54) **AIRBAG MODULE WITH CONTROLLED VENTING**
AIRBAGMODUL MIT STEUERBARER ENTLÜFTUNG
MODULE DE COUSSIN GONFLABLE A OUVERTURE CONTROLEE SUR L'ATMOSPHERE

(30) Priority: 30.05.2002 US 384227 P
(43) Date of publication of application: 23.02.2005
(73) Proprietor: KEY SAFETY SYSTEMS, INC., Sterling Heights, MI 48314 (US)
(72) Inventor: FORD, Brian, Mt. Clemens, MI 48043 (US)
(74) Representative: Gislon, Gabriele
(86) International application number: PCT/US2003/006573
(87) International publication number: WO 2003/101782

(56) References cited:
- US-A- 5 234 229
- US-A- 5 799 974
- US-A1- 2002 089 159

## Description

The present invention generally relates to airbag modules and more particularly to airbag modules that can be vented.

It is well known in the industry, a vehicle occupant located too close to an airbag, sometimes called an out-of-position-occupant, may have an increased risk of injury due to a deploying airbag.

US 5234229 discloses a pressure limiting device for an airbag which is activated only upon air bag pressure reaching a predetermined level. The inflator (40) is fixed to the base plate (20) by means of a peripheral mounting flange (44) through pins (50) and springs (52). The inflator (40) and the base plate (20) act as a relief valve; upon the inflation of the air bag (10) the fluid pressure exerts a force F on the top (45) of the inflator (40); when this force F exceeds a predetermined level, the discharge ports (43) will lie below the base plate (20) and the pressurized gas discharges through ports (43) (see Figures 1, 2, 3). Figure 4 shows an inflator (60) attached to guide pins (68) and supported by plate (74). The inflator is urged downward by force F exerted by the fluid pressure in the air bag; the plastically yieldable support (72) collapses (see Figure 5).

US 5799974 discloses the control of the time sequence of inflating and deflating the air bag in a highly accurate manner. The inflator (3) is received inside an enclosed space formed between a retainer (5) and an air bag (2) (see Figures 6 and 7). In operation, during the initial inflation of the air bag, the inflator (3) is pushed against the bottom wall of the retainer (5) owing to the reaction to the ejection of gas from the gas holes (15a). Thus, the vent holes (22) are closed.
According to the first embodiment the inflator is attached to strings (23) which are connected between front parts of the air bag (2) and the retainer (5); consequently, when the air bag is inflated, the tie strings (23) are stretched, the inflator moves away frm the retainer (5), exposing the vent holes (22) (see Figure 8).
In the second embodiment, the inflator (3) is received inside an air-permeable bag (24), which is initially pushed against the retainer (5) and, subsequently to the inflation of the air bag (2), tit is pushed away from the retainer (23) exposing the vent holes (22) (see Figure 9).
In the third embodiment the inflator (3) is received in a bag (25) attached to the center hub (4a) of the steering wheel (4) (see Figure 10).

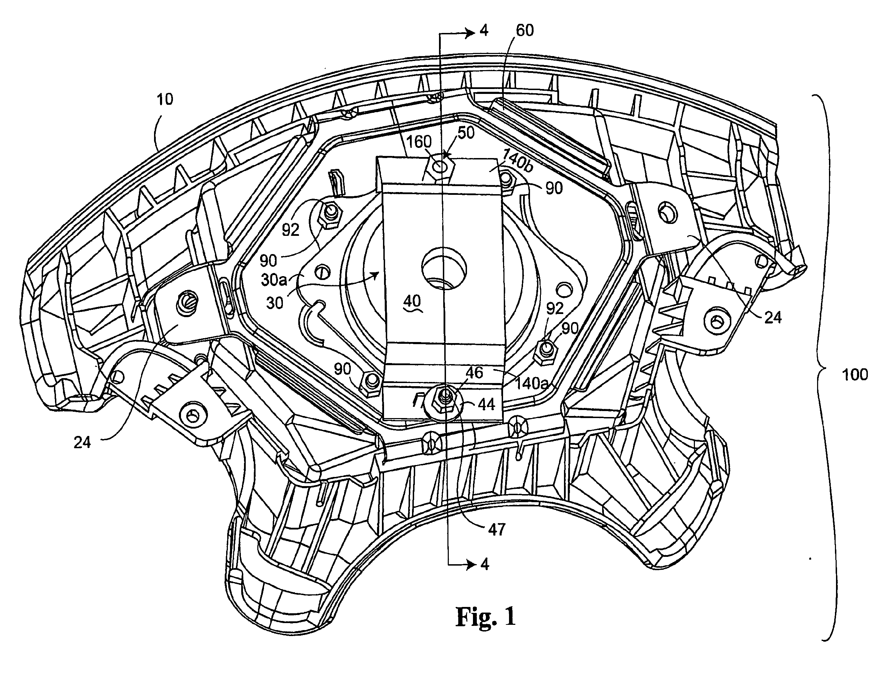

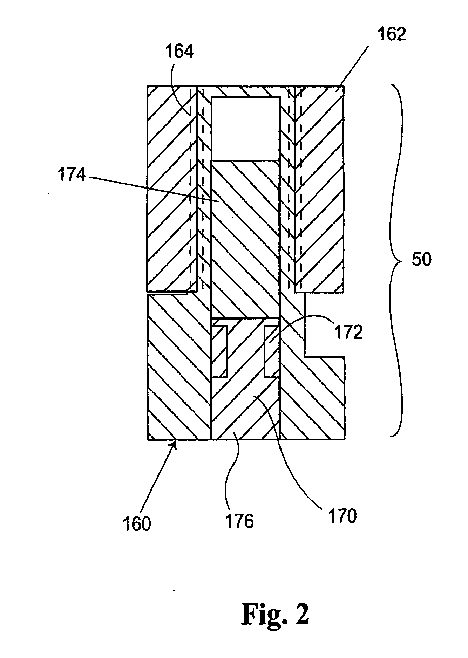

The inflation fluid is selectively vented from the air bag module of US 2002/0089159. An inflator (14) is supported within the air bag module by means of a mounting plate (30), while a retainer (40) is supported for sliding movement (relative to the mounting plate) by means of support ports (50) moving axially in the openings (54) of the mounting plate (30) (see Figure 2). A release mechanism (80) controls the axial movement of the retainer (40) relative to the mounting plate (30). This release mechanism (80) includes two solenoids (82), each of which engages the stop (52) of the support (50) in the non actuated condition (see Figure 1); thus the retaining is blocked from movement in the direction (86). When the release mechanism (80) transmits actuating signals to the solenoids (82), they make the actuator rods (84) to move out of engagement with the support ports (50) (see Figure 2). The force of the inflating air bag (12) pulls the retainer (40) away from the mounting plate (30) and the vent openings (36) remain uncovered in the mounting plate (30) enabling thereby the inflation fluid to flow out of the air bag.

The present invention provides a solution to this problem as well as improved airbag module. There is provided in accordance with one aspect of the invention an airbag module comprising: a housing including a receiving feature to receive at least a portion of an inflator, the inflator providing inflation gas to an airbag; the inflator being removably received in the receiving feature; and a holding member movable between a first position and a second position, the holding member, while in the first position fixing an inflator to a housing, the holding member being movable between the first and the second positions under the influence of the inflator, characterized according to claim 1.

### BRIEF DESCRIPTION OF THE DRAWINGS

Figure 1 is an isometric view of a driver side airbag module incorporating the present invention.
Figure 2 is a cross-sectional view of a separation cylinder.

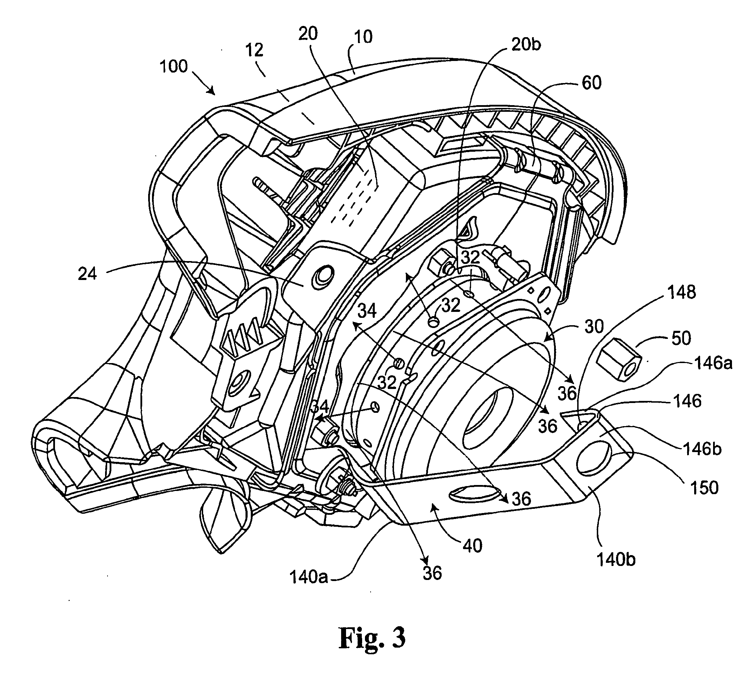

Figure 3 is an isometric view of the airbag module in its vented condition.

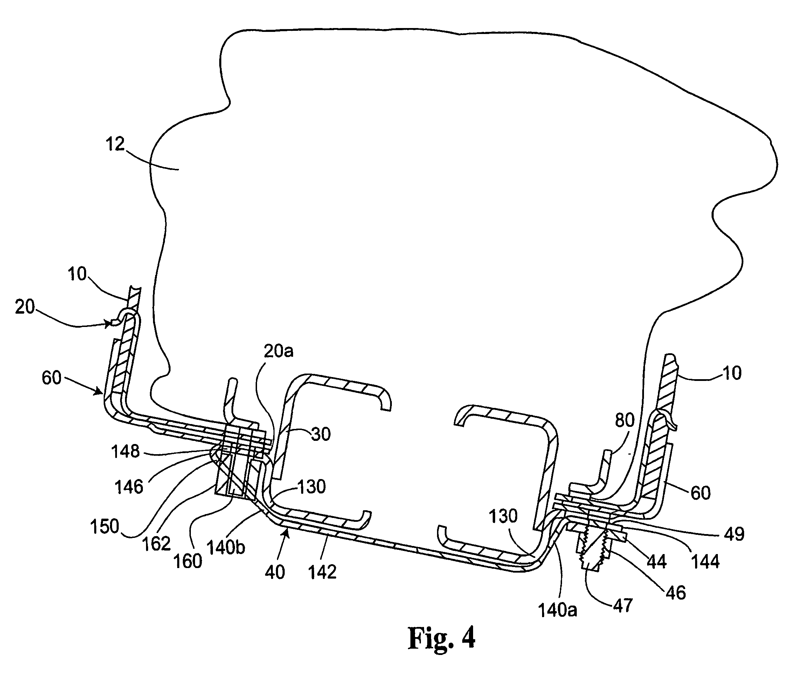

Figure 4 is a cross-sectional view taken through section line 4-4 of Figure 1.

### DETAILED DESCRIPTION OF THE INVENTION

The present invention solves the deficiencies of the prior art by presenting an airbag module that contains an apparatus for nearly instantaneously causing the inflator to vent outside of the module, while also allowing the airbag to quickly vent from the rear of the module.

Figure 1 is an isometric view of a driver side airbag module incorporating the present invention and Figure 4 is a cross-sectional view taken through section line 4-4 of Figure 1. Figures 1 and 4 show many of the major components of the present invention. An airbag module 100 has an airbag cover 10, an airbag 12, a housing 20, and an inflator 30. The airbag module further includes a moveable inflator strap, also referred to as a brace or bracket, and a separation cylinder assembly 50. Fastening mechanisms include a cover bracket 60, a fixable inflator retention nut 44 and washer 46, a retaining ring 80, housing and retaining ring nuts 90 and associated threaded bolts 92.

In Figure 4 a retaining ring 80 is shown received within an opening in the neck of the airbag 12 in a conventional manner. The retaining ring 80 clamps the neck of the airbag against a housing surface. As the airbag deploys it is retained by the retaining ring 80, that is, after the airbag cover 10 has been moved out of the way of the inflating airbag. The retaining ring 80 is fixed to the housing 20 by a plurality of threaded fasteners 92 and corresponding nuts 90 in a known manner. The fasteners 92 can extend from the retaining ring 80 and extend through small holes in the airbag and the housing. The nuts 92 are received on the fasteners 90. In the prior art, the fasteners 92 would have also extended through small openings in the flange 30a of the inflator 30, which is not the case in the present invention. The housing 20 includes a number of other features including opposing flanges 34 with holes therein to facilitate connection of the housing to a steering wheel (not shown).

The inflator 30, as is typical of the construction of driver side inflators, is partially received within a central opening 20a of the housing 20. In this mounted orientation the inflator's inflation ports, also called exit ports, 32 are located within the airbag 12. In this present invention, the inflator 30 is not secured to the housing 20 by the fasteners 90,92 associated with the retaining ring 80, housing and inflator flange. The inflator 30 of the present invention is loosely or removably mounted to the housing. The inflator is mounted to the housing to create a seal about the housing opening 20a to prevent the blow-by of inflation gas as long as the inflator stays in place. The inflator 30 is prevented from moving rearward relative to the rear of the module, or housing, by at least one inflator strap 40.

In the preferred embodiment of the invention the strap 40 is made from steel such as spring steel. One side of the inflator strap 40 is removably held relative to the housing 20 or to the cover bracket 60 by the separation cylinder assembly 50, which is described in greater detail in conjunction with Figure 2. The inflator strap 40 bridges the housing opening 20a as well as bridges the rear of the inflator 30. This cooperation essentially locks (at least temporarily) or otherwise holds the inflator in place. The inflator strap 40 is secured relative to the cover bracket or to the housing along a side opposite the separation cylinder assembly 50 by a washer 44 and the fixable inflator retaining nut 46. The washer 44 and nut 46 are received upon a threaded retaining fastener 47, which extends from a part of the module such as the cover bracket 60 or the housing. As illustrated the fastener 47 extends from the cover bracket 60. The washer, nut and fastener can be replaced by a weld or rivet or the like. Alternatively, the fastener 47 can extend from the housing 20 or a housing-retaining ring fastener 92 can be used.

The strap 40 includes a center portion 142, in-contact with the rear of the inflator 30 and which biases the inflator into the housing. The retention strap 40 also includes first and second legs or ends 140a, 140b. The first leg 140a includes a radially extending flange or portion 144 having a hole therein for receipt of fastener 47. This flange 144 is held from outward movement relative to the cover bracket or to the housing by the washer 44 and the fixable inflator retaining nut 46. The second leg 140b is secured to the cover bracket 60 or to the housing 20 by a separation cylinder assembly 50. The second leg 140b includes a bent-over portion; numeral 146 designates the bend in the strap. Strap portions 146a, 146b are located on either side of the bend 146. Portion 146a includes a small opening 148 and portion 146b includes a larger diameter opening 150.

Figure 4 also shows the flange 144 is not pressed against the bracket 60 (or the housing 20) but is spaced therefrom by spacing 47. This spacing is optional and depending upon the material of the strap 40 assists the strap in rotating, moving away from its secured position as shown in Figure 4. Even with the flange 144 spaced from the housing 20, the inflator 30 is firmly secured to the housing 20. In this orientation, the strap 40 pushes against the outer corner 130 (at least at one location if not at more locations) of the inflator 30 to maintain the inflator in place.

The strap 40 could be manufactured from a strong, though very flexible material, such as a piece of seat belt webbing. If this were the case, the seat belt type strap would easily conform to the shape of the bottom of the housing to which it is attached and to the inflator and be strong enough to hold the inflator in place until the separation cylinder assembly is activated.

The separation cylinder assembly 50, which is shown in more detail in Figure 2, has a housing 160 (generally made from plastic or a soft metal) which functions as a support for a cooperating nut 162. Each of the nut 162 and support 160 may include mating threads generally shown by numeral 164 to provide for a tightened connection therebetween. Alternately, the nut 162 and support 160 can be press-fit together. The separation cylinder assembly 50 also includes: a pyrotechnic bridge plug 170, an ignition charge 172 (a known type of pyrotechnic material), an RDC (rapid deflagration cord), a fast burning pyrotechnic 174 and a connector wire 176. When an electrical signal is received from a controller (not shown) the bridge plug ignites the ignition charge, which in turn causes the RDC (or some other propellant charge) to ignite and burn intensely and rapidly. As the RDC is consumed, a great deal of heat is generated. This heat weakens the structural integrity of the support 160 (or the nut 162) permitting the separable nut 162 to be ready to be pushed free of the support 160.

For example, the heat generated can be set to a level sufficient to melt or otherwise destroy the threads or the mutual press-fit connection between the support 160 and the nut 162. In any case, once the structural integrity of the support 170, or nut, is reduced the nut and the support are effectively disconnected. The prior art is aware of another pyrotechnic element called an "explosive bolt;" this bolt can in concept also be used to selectively secure one leg of the inflator strap 40. When a charge imbedded within the bolt is ignited the bolt is caused to crack or shatter. In view of the above when the separation cylinder assembly 50 has been activated, the inflator 30 will no longer be securely retained relative to the housing 20 by the inflator retention strap 40.

During a crash the inflator 30 is activated, in a known manner and in general, releases or produces inflation gas to inflate the airbag 12 to protect a vehicle occupant. The inflation gas exits the inflator 30 and enters the airbag 12 via the inflator exit ports 32. During normal operation the airbag is inflated and then deflates within about 100 milliseconds. As mentioned above some airbags include vents to assist the airbag in deflating.

In many operational situations it would be desirable to control the rate of inflation of the airbag or the degree to which the airbag is inflated as well as the deflation characteristics of the airbag. These matters can be accomplished by the present invention. Consider a situation in which the capacity of the inflator has been properly chosen to protect the larger 95^{th} percentile male driver or occupant. The airbag inflation characteristics achieved using this type of inflator may not be optimally matched, for example, for a 5th percentile female driver including one such driver sitting extremely close to the steering wheel or even to this larger sized driver seated in an out-of-position seating orientation (such as also seated close to the steering wheel or off to one side).

In these situations it can be desirable to activate the separation cylinder assembly 50 to permit the disassociation of the inflator 30 from the housing 20 to control the inflation of the airbag and/or the deflation of the airbag. During any deployment event when the airbag is inflated, the pressure forces act on the interior of the airbag 12 as well as act upon the surfaces of the inflator 30 inside of the airbag. In the present invention the inflator 30 remains connected to the housing and to the airbag 12 because the strap 40 acts as a mechanical stop preventing disassociation of the inflator from the housing and airbag. Once the separation (cylinder) assembly 50 is activated one leg of the strap 40 is no longer bound to the housing 20. The pressure within the airbag, generated by the inflation gas, acts on the exposed internal surfaces of the inflator 30 and pushes or tends to push the inflator away from the housing 20. In addition to the pressure forces acting on the inflator, the streams of inflation gas exiting the inflator 30 will in general generate a reaction force on the inflator, which also urges the inflator away from the housing. These forces move the inflator at least partially out of the housing opening 20a as the inflator pushes on the now freed leg of the strap 40. The inflation gas within the airbag flows therefrom through the space 20b now created between the displaced inflator and the central opening 20a of the housing 20.

In view of the above forces, which act on the inflator, and further in view of the fact the second leg 140b of the strap 40 is free to move or be moved, these forces push the inflator rearward away from the housing 20 and the housing's central opening 20a. The second leg 140b dislodges from the support 160 of the assembly 50 and the strap is free to bend, and/or to more rearward or rotate about the secured end 140a of the strap, which permits the inflator to move rearward, and acts as a hinge (see Figure 3) as the strap is pushed by the inflator 30. Having opened a vent or space 20b about at least a portion of the inflator, the pressurized gas in the airbag is free to exit therefrom (as shown by arrows 36), additionally, if the inflator is moved sufficiently away from the housing 20 some if not all of the gas exiting the exit ports 32 of the inflator will enter the local atmosphere rather than enter the airbag, as shown by arrows labeled as 34 in Figure 3.

Since it is possible to electronically activate the separation cylinder assembly 50 this activation can be done at varied times to accomplish the desired result, for example, at the same time as the inflator is activated. In this mode of operation the inflation capability of the airbag will be decreased as inflation gas will almost continuously be vented. The time the assembly 50 is activated can be delayed relative to the activation of the inflator, or even activated in advance of the inflator. The time difference between activation of the assembly 50 and the inflator 30 can be in proportion to the weight of the vehicle occupant, or the vehicle occupant's seating position, or to the size of the occupant via some type of occupant classification system. The vehicle occupant's position can be determined for example by measuring the position of the vehicle seat on the seat track or using an ultra sonic sensor to measure the distance between the steering wheel and the vehicle occupant.

It is possible to selectively vent the module if an out-of-position vehicle occupant is detected. One added benefit of the invention is the direction of inflation gas flow exiting from the inflator or the direction of gas vented from the airbag is away from the occupant. In addition, it is now possible to vent the airbag at a predetermined time for a properly positioned vehicle-occupant. For example, the firing delay is chosen to be sufficiently long which permits the airbag to become fully inflated and then with the airbag fully inflated, the assembly 50 is activated. In this manner the operation of the system primarily vents all of the inflation gas from an inflated airbag.

## Claims

1. An airbag module (100) comprising:
a housing (20) including a receiving feature to receive at least a portion of an inflator (30), the inflator providing inflation gas to an airbag;
the inflator being removably received in the receiving feature;
a holding member (40) is movable between a first position and a second position, the holding member, while in the first position fixing an inflator (30) to a housing (20), the holding member being movable between the first and the second positions under the influence of the inflator, the airbag module is configured to have pressurized inflation gas within the airbag urge the inflator out of the housing to move the holding member a first distance, sufficient to permit inflation ges, within the airbag, to be vented to the atmosphere, **characterized in that** the holding member includes a bracket which bridges the rear of the inflator (30) and wherein a first end (140a) of the strap is relatively fixedly secured in relation to the housing and an opposite end (140b) of the strap is removably secured in relation to the housing to act as a mechanical stop preventing disassociation of the inflator from the housing and airbag.

2. An airbag module as defined in claim 1 wherein the module is a driver side airbag module.

3. An airbag module as defined in either of claims 1 or 2 wherein the receiving feature comprises an opening (20a) in the housing (20) and wherein said bracket bridges the opening (20a) and urges the inflator (30) onto the housing.

4. An airbag module as defined in any of claims 1-3 wherein the bracket comprises a flexible strap (40).

5. An airbag module as defined in any of claims 1 - 4 wherein the bracket comprises a flexible strap made of the spring steel.

6. An airbag module as defined in either of claims 4 or 5 wherein a middle portion of the strap is in contact with a portion of the inflator.

7. An airbag module (100) as defined in Claim 6 wherein the first end of the strap is loosely secured relative to the housing to facilitate rotation of the strap about the first end.

8. An airbag module as defined in any of claims 1 - 7 wherein the holding member is at least in part, selectively removable in a timed relation to the activation of the inflator.

9. An airbag module as defined in any of claims 1 - 8 wherein the holding member includes at least one leg relatively movable in reflation to the housing and wherein the module further includes a pyrotechnic element which upon activation disassociates the one leg of the holding member relative to the housing.

## Patentansprüche

1. Airbagmodul (100), umfassend:
Ein Gehäuse (20), das ein Aufnahmemerkmal zum Aufnehmen mindestens eines Teils eines Gasgenerators (30), wobei der Gasgenerator einem Airbag Aufblasgas bereitstellt;
den Gasgenerator, der entfernbar im Aufnahmemerkmal aufgenommen ist;
ein Halteelement (40), das zwischen einer ersten Position und einer zweiten Position bewegbar ist, wobei das Halteelement, während es sich in der ersten Position befindet, einen Gasgenerator (30) an ein Gehäuse (20) befestigt, wobei das Halteelement zwischen den ersten und zweiten Positionen, unter dem Einfluss des Gasgenerators, bewegbar ist, wobei das Airbagmodul konfiguriert ist, dass unter Druck stehendes Aufblasgas im Airbag den Gasgenerator aus dem Gehäuse drängt, um das Halteelement eine erste Distanz zu bewegen, ausreichend, um dem Aufblasgas im Airbag zu erlauben zur Atmosphäre entlüftet zu werden, **dadurch gekennzeichnet, dass** das Halteelement einen Träger einschließt, der die Rückseite des Gasgenerators (30) überbrückt und wobei ein erstes Ende (140a) des Bands relativ fest in Bezug auf das Gehäuse gesichert ist und ein gegenüberliegendes Ende (140b) des Bands entfernbar in Bezug auf das Gehäuse gesichert ist, um als ein mechanischer Stopp zu fungieren, der Loslösung des Gasgenerators vom Gehäuse und dem Airbag verhindert.

2. Airbagmodul nach Anspruch 1, wobei das Modul ein Fahrer-Airbagmodul ist.

3. Airbagmodul nach entweder Anspruch 1 oder 2, wobei das Aufnahmemerkmal eine Öffnung (20a) im Gehäuse (20) umfasst und wobei der Träger die Öffnung (20a) überbrückt und den Gasgenerator (30) auf das Gehäuse drängt.

4. Airbagmodul nach einem beliebigen der Ansprüche 1 - 3, wobei der Träger ein flexibles Band (40) umfasst.

5. Airbagmodul nach einem beliebigen der Ansprüche 1 - 4, wobei der Träger ein flexibles Band umfasst, das aus Federstahl hergestellt ist.

6. Airbagmodul nach entweder Anspruch 4 oder 5, wobei ein Mittelteil des Bands mit einem Teil des Gasgenerators in Kontakt ist.

7. Airbagmodul (100) nach Anspruch 6, wobei das erste Ende des Bands in Bezug auf das Gehäuse locker gesichert ist, um die Rotation des Bands um das erste Ende zu erleichtern.

8. Airbagmodul nach einem beliebigen der Ansprüche 1 - 7, wobei das Halteelement mindestens teilweise selektiv in einer zeitgesteuerten Beziehung zur Betätigung des Gasgenerators entfernbar ist.

9. Airbagmodul nach einem beliebigen der Ansprüche 1 - 8, wobei das Halteelement mindestens einen Abschnitt aufweist, der in Bezug auf das Gehäuse relativ bewegbar ist und wobei das Modul weiter ein pyrotechnisches Element aufweist, das nach Betätigung den einen Abschnitt des Halteelements in Bezug auf das Gehäuse loslöst.

## Revendications

1. Module d'airbag (100) comprenant:
Un boîtier (20) comprenant un élément de réception pour recevoir au moins une partie d'un gonfleur (30), le gonfleur fournissant du gaz d'expansion à un airbag;
Le gonfleur étant reçu de manière retirable dans l'élément de réception;
Un membre de maintien (40) peut se déplacer entre une première position et une seconde position, le membre de maintien, pendant qu'il est dans la première position attachant le gonfleur (30) au boîtier (20), le membre de maintien pouvant se déplacer entre les première et seconde positions sous l'influence du gonfleur, le module d'airbag est configuré pour que du gaz d'expansion pressurisé à l'intérieur de l'airbag fasse sortir le gonfleur du boîtier pour déplacer le membre de maintien sur une première distance, suffisante pour permettre au gaz d'expansion, à l'intérieur de l'airbag, d'être libéré dans l'atmosphère, **caractérisé en ce que** le membre de maintien comprend un support qui passe au-dessus de l'arrière du gonfleur (30) et dans lequel une première extrémité (140a) de l'attache est attachée de manière relativement fixe par rapport au boîtier et l'autre extrémité (140b) de l'attache est attachée de manière retirable au boîtier pour agir comme un arrêt mécanique pour empêcher le gonfleur de se dissocier du boîtier et de l'airbag.

2. Module d'airbag selon la revendication 1, dans lequel le module est un module d'airbag de côté conducteur.

3. Module d'airbag selon la revendication 1 ou 2, dans lequel l'élément de réception comprend une ouverture (20a) dans le boîtier (20) et dans lequel ledit support passe au-dessus de ladite ouverture (20a) et amène le gonfleur (30) sur le boîtier.

4. Module d'airbag selon l'une quelconque des revendications 1 à 3, dans lequel le support comprend une attache flexible (40).

5. Module d'airbag selon l'une quelconque des revendications 1 à 4, dans lequel le support comprend une attache flexible faite en acier à ressort.

6. Module d'airbag selon la revendication 4 ou 5, dans lequel une partie centrale de l'attache est en contact avec une partie du gonfleur.

7. Module d'airbag (100) selon la revendication 6, dans lequel la première extrémité de l'attache est attachée lâchement par rapport au boîtier pour faciliter la rotation de l'attache autour de la première extrémité.

8. Module d'airbag selon l'une quelconque des revendications 1 à 7, dans lequel le membre de maintien est au moins en partie, retirable de manière sélective en relation temporelle avec l'activation du gonfleur.

9. Module d'airbag selon l'une quelconque des revendications 1 à 8, dans lequel le membre de maintien comprend au moins une patte pouvant se déplacer de manière relative par rapport au boîtier et dans lequel le module comprend en outre un élément pyrotechnique qui dissocie la patte du membre de maintien du boîtier au moment de son activation.
